Europäisches Patentamt

European Patent Office

Office européen des brevets

(11) Veröffentlichungsnummer : **0 033 401**
**B1**

(12) **EUROPÄISCHE PATENTSCHRIFT**

(45) Veröffentlichungstag der Patentschrift :
11.04.84

(21) Anmeldenummer : 80201079.3

(22) Anmeldetag : 13.11.80

(51) Int. Cl.³ : **B 01 D 53/34**

(54) Verfahren zum Entfernen von H2S, CO2, COS und Merkaptanen aus Gasen durch Absorption.

(30) Priorität : 05.01.80 DE 3000250

(43) Veröffentlichungstag der Anmeldung :
12.08.81 Patentblatt 81/32

(45) Bekanntmachung des Hinweises auf die Patenterteilung : 11.04.84 Patentblatt 84/15

(84) Benannte Vertragsstaaten :
DE FR GB IT NL

(56) Entgegenhaltungen :
DE-A- 1 444 963
DE-A- 2 134 379
DE-A- 2 146 775
DE-A- 2 616 620
DE-A- 2 831 040
US-A- 2 863 527
Handbook of Chemistry and Physics, 55. Ausgabe
(1974-75), Seiten D-18 und D-19

(73) Patentinhaber : METALLGESELLSCHAFT AG
Reuterweg 14 Postfach 3724
D-6000 Frankfurt/M.1 (DE)

(72) Erfinder : Doerges, Alexander, Dr. Dipl.-Chem.
Ziegenhainer Strasse 95
D-6000 Frankfurt am Main 50 (DE)
Erfinder : Kriebel, Manfred, Dr. Dipl.-Ing.
Tirolerstrasse 61
D-6000 Frankfurt am Main 70 (DE)
Erfinder : Schlauer, Johann, Dipl.-Ing.
Zwischenstrasse 11
D-6000 Frankfurt am Main 70 (DE)

(74) Vertreter : Fischer, Ernst, Dr.
Reuterweg 14
D-6000 Frankfurt am Main 1 (DE)

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

**0 033 401**

Verfahren zum Entfernen von $H_2S$, $CO_2$, COS und Merkaptanen aus Gasen durch Absorption

Die Erfindung betrifft ein Verfahren zum Entfernen von $H_2S$, $CO_2$, COS und Merkaptanen aus Gasen durch Absorption mittels einer im Kreislauf zwischen einer Absorptionszone und einer Regenerationszone geführten Absorptionslösung, die mindestens eine organische Base in einem organischen Lösungsmittel, das die zu entfernenden Gasbestandteile physikalisch löst, enthält, wobei die Absorption bei einem Druck von 1 bis 180 bar und bei Temperaturen von 5 bis 80 °C erfolgt.

Bei natürlichen oder durch Vergasung kohlenstoffhaltiger Substanzen erzeugten Gasen müssen die sauren oder schwefelhaltigen Verunreinigungen vor der Verwendung der Gase entfernt werden, was bevorzugt durch Auswaschen mit geeigneten Absorptionslösungen erfolgt. Insbesondere bei der Verwendung solcher Gase für katalytische Reaktionen wie z. B. für die Synthese von Methanol werden zum Schutz der Katalysatoren oft nur äusserst niedrige Restgehalte an Schwefelverbindungen gefordert. Dabei bereitet besonders das Kohlenoxisulfid (COS) Schwierigkeiten, weil es bei normaler Temperatur wenig reaktionsfreudig ist und sich in den üblichen physikalisch wirkenden organischen Lösungsmitteln wie z. B. Methanol nur schlecht löst. Man ist also gezwungen, für eine sehr weitgehende Entfernung der Schwefelverbindungen, insbesondere des COS, verhältnismässig grosse Mengen an Absorptionslösung aufzuwenden. Damit ist ein entsprechend großer Aufwand für Investitionen und Betriebsmittel wie elektrischer Strom und Dampf erforderlich.

Es ist bekannt, die Absorption der sauren Gase und organischen Schwefelverbindungen z. B. in Methanol dadurch zu verbessern, daß man dem Methanol 0,2 bis 4 Mol/l eines Äthanolamins zusetzt (DE-C-1815 137). Hierbei treten jedoch unerwünschte Nebenreaktionen der Äthanolamine auf, wobei thermisch nicht regenerierbare Verbindungen gebildet werden. Diese Nebenprodukte müssen mit zusätzlichem Aufwand z. B. als Rückstand einer Destillation aus der Absorptionslösung entfernt werden, um die Waschwirkung konstant zu halten und Korrosionen zu vermeiden.

Der Erfindung liegt die Aufgabe zugrunde, diese und andere Nachteile des Standes der Technik zu beseitigen.

Diese Aufgabe wird erfindungsgemäß dadurch gelöst, daß man als Absorptionslösung zur Entfernung von $H_2S$, $CO_2$, COS und Merkaptanen aus Gasen, die diese Bestandteile enthalten, eine Absorptionslösung einsetzt, die pro Liter insgesamt 0,5 bis 5,0 Mol eines oder mehrerer sekundärer oder tertiärer Amine der allgemeinen Formel $R_1$—NH—$R_2$ oder $(R_1)_2$—N—$CH_2$—N—$(R_1)_2$ enthält, wobei $R_1$ und $R_2CH_3$ oder $CH_2$—$CH_3$ oder $CH_3$—CH—$CH_3$ bedeutet und der Siedepunkt des oder der Amine bei 1 bar zwischen 40° und 110 °C liegt, einschließlich Methylethylamin.

« Pro Liter insgesamt 0,5 bis 5,0 Mol » bedeutet, daß die Summe aller in einem Liter Absorptionslösung enthaltenen, vorstehend definierten Amine 0,5 bis 5,0 Mol betragen soll.

Zu den erfindungsgemäß eingesetzten sekundären oder tertiären Aminen der allgemeinen Formel $R_1$—NH—$R_2$ oder $(R_1)_2$—N—$CH_2$—N—$(R_2)_2$, wobei $R_1$ und $R_2CH_3$ oder $CH_2$—$CH_3$ oder $CH_3$—CH—$CH_3$ bedeutet, gehören u. a. die aliphatischen Alkylamine Diäthylamin $CH_3CH_2NH\,CH_2CH_3$, Methyläthylamin $CH_3NHCH_2CH_3$, Methylisopropylamin $CH_3NHCH(CH_3)_2$, Äthylisopropylamin $CH_3CH_2NHCH(CH_3)_2$, Diisopropylamin $(CH_3)_2CHNHCH(CH_3)_2$, Bis-(dimethylamino) methan $(CH_3)_2N\,CH_2\,N\,(CH_3)_2$, Bis-(diäthylamino) methan $(CH_3CH_2)_2NCH_2N(CH_2CH_3)_2$, (Dimethylamino) (diäthylamino) methan $(CH_3)_2NCH_2N(CH_2CH_3)_2$.

Im Rahmen der Erfindung können somit $R_1$ und $R_2$ gleich oder verschieden sein. Bevorzugt werden erfindungsgemäß als Amine Diisopropylamin oder Bis-dimethylaminomethan verwendet.

Als organisches Lösungsmittel sind alle gebräuchlichen Lösungsmittel geeignet, welche mit den Gasbestandteilen nicht irreversibel reagieren und durch Erhitzen oder Auskochen bei annähernd 1 bar regeneriert werden können. Insbesondere geeignet sind einwertige Alkohole wie Methanol, Äthanol, Propanol, Isopropanol. Auch N-alkylierte Pyrrolidone und Piperidone und Lactame wie N-Methylpyrrolidon und N-Methyl-E-Caprolactan sind geeignet, ferner auch Dialkylglykoläther. Das Lösungsmittel kann auch Wasser enthalten oder aufnehmen. Bevorzugt wird Methanol als organisches Losungsmittel verwendet.

Wenn im Rahmen der Erfindung Methanol als organisches Lösungsmittel verwendet wird, werden in einer bevorzugten Ausführungsform aus den gewaschenen Gasen und/oder den Regenerierabgasen Methanol und Amin gemeinsam mittels Wasser zurückgewaschen und aus dem Methanol-Amin-Wasser-Gemisch Methanol und Amin abdestilliert und dem Absorptionslösungskreislauf wieder zugesetzt.

Nach einer Ausgestaltung der Erfindung entzieht man dem Gas in einer ersten Absorptionszone das gesamte $H_2S$ und gleichzeitig höchstens 60 % des $CO_2$-Gehaltes und entfernt in einer zweiten Absorptionszone das restliche $CO_2$ aus dem Gas.

Die erfindungsgemäß zusammengesetzte Absorptionslösung hat den besonderen Vorteil, daß sie bevorzugt $H_2S$ gegenüber $CO_2$ entfernt, d. h., sie ist selektiv für $H_2S$. Dabei ist eine Absorptionslösung als selektiv für $H_2S$ anzusehen, wenn im absorbierten Gasanteil und somit im Regenerationsabgas das Volumenverhältnis $H_2S : CO_2$ größer ist als im Gas vor der Absorption. Diese Eigenschaft der Absorptionslösung ist besonders dann von wirtschaftlicher Bedeutung, wenn dieses Mengenverhältnis $H_2S : CO_2$ im zu reinigenden Gas klein ist und der absorbierte Gasanteil in möglichst konzentrierter Form zu Schwefel oder Schwefelsäure aufgearbeitet werden soll.

2

0 033 401

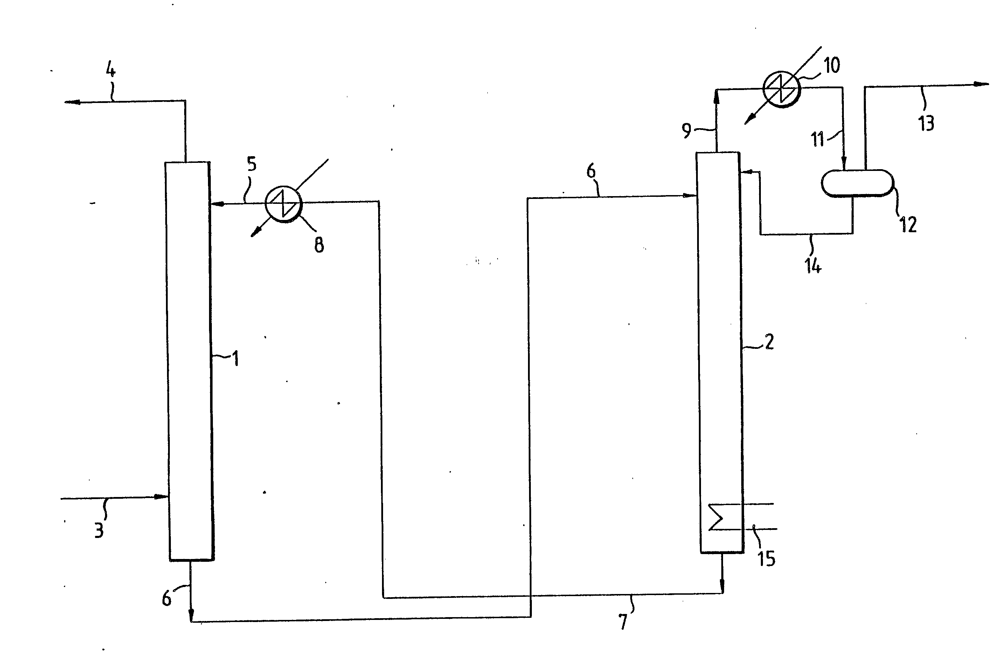

Die vorteilhaften Eigenschaften des erfindungsgemäßen Verfahrens und der vorgeschlagenen Absorptionslösungen werden in der Figur und in den nachfolgenden Beispielen weiter erläutert.

Tabelle 1 zeigt die Ergebnisse von Vergleichsversuchen für das Absorptionsvermögen für gasförmiges $CO_2$ bei gleicher Temperatur.

Tabelle 1

| | Stand der Technik | | Erfindung |
|---|---|---|---|
| $CO_2$-Partial-druck (bar) | Lösung 1 Mol$CO_2$/ Mol Amin | Lösung 2 Mol$CO_2$/ Mol Amin | Lösung 3 Mol$CO_2$/ Mol Amin |
| 0,1 | 0,49 | 0,79 | 1,40 |
| 0,2 | 0,53 | 0,88 | 1,55 |
| 0,4 | 0,59 | 0,93 | 1,67 |
| 0,6 | 0,63 | 0,94 | 1,72 |
| 0,8 | 0,67 | 0,95 | 1,75 |
| 1,0 | 0,70 | 0,96 | 1,77 |

Die Lösung 1 enthält gemäß dem Stand der Technik Monoäthanolamin in Methanol. Die Lösung 2 enthält gemäß der Erfindung Diisopropylamin in Methanol. Die Lösung 3 enthält gemäß der Erfindung Bis-dimethylamino-methan in Methanol. Wie ersichtlich, nehmen die erfindungsgemäßen Lösungen, bezogen auf den Amingehalt, viel mehr $CO_2$ auf als die Lösung gemäß dem Stand der Technik.

Dadurch wird bei gleichem Amingehalt viel weniger im Kreislauf geführte Absorptionslösung benötigt, um eine bestimmte $CO_2$-Menge zu absorbieren.

In Tabelle 2 wird die Löslichkeit von Kohlenoxisulfid COS in 4 verschiedenen Lösungen verglichen, und zwar in Methanol ohne Zusatz sowie in Lösungen verschiedener Amine in Methanol.

Tabelle 2

| | Stand der Technik | | Erfindung | |
|---|---|---|---|---|
| Lösung | relative COS-Löslichkeit | | Lösung | relative COS-Löslichkeit |
| Methanol ohne Amin | 1 | | Diisopropylamin in Methanol | 6 |
| Diäthanolamin in Methanol | 5 | | Bis-dimethylamino-methan in Methanol | 6 |

Die Löslichkeit von COS ist in relativen Zahlen für Messungen bei Raumtemperatur und bei gleichen molaren Amin-Konzentrationen angegeben, wobei die Löslichkeit in Methanol ohne Amin gleich 1 gesetzt wurde. Die Werte wurden für einen $CO_2$-Partialdruck von 0,4bar ermittelt, also für ein teilweise neutralisiertes Amin.

Die Tabelle zeigt, daß schon durch den Zusatz von Diäthanolamin die Löslichkeit von COS verbessert wird.

In den erfindungsgemäßen Absorptionslösungen mit Diisopropylamin oder Bis-dimethylamino-methan ist die relative Löslichkeit noch größer.

In weiteren Versuchen (siehe Tabelle 3) wurde festgestellt, daß in den erfindungsgemäßen Absorptionslösungen C-Stahl (Kesselblech) in Gegenwart von sauren Gasen wie $CO_2$ und $H_2S$ nicht angegriffen wird. In Glasgefäßen wurden verschiedene Lösungen zum Sieden unter Rückfluß in Gegenwart von $CO_2$ (Versuche 1 bis 3) sowie von $CO_2$ mit 1 Vol.-% $H_2S$ (Versuch 4) erhitzt. Probebleche aus Eisen befanden sich teils in der flüssigen Phase, teils in der Gasphase. In der Tabelle 3 sind die nach längerer Dauer gefundenen Gewichtsverluste und Beobachtungen zusammengestellt.

Tabelle 3

| Versuch Nr. | Stand der Technik | | Erfindung | |
| --- | --- | --- | --- | --- |
| | 1 | 2 | 3 | 4 |
| Lösungsmittel | Wasser | Methanol | Methanol | Methanol |
| Amin | MEA | MEA | DIPAM | DIPAM |
| Dauer (Stunden) | 64 | 112 | 286 | 743 |
| Gewichtsverlust g/m² · Tag | 0,4 | 0,1 | 0 | 0 |
| Belag | stark | ja | nein | nein |

(MEA = Monoäthanolamin ; DIPAM = Diisopropylamin)

Daraus ergibt sich, daß in den MEA-haltigen Lösungen 1 und 2 Eisen deutlich angegriffen wurde. Bei den Versuchen 3 und 4 dagegen entsprach die Lösung der erfindungsgemäßen Absorptionslösung mit Diisopropylamin und übte keinerlei korrosive Wirkung aus.

## Verfahrensbeschreibung

Anhand der Figur wird nachstehend die Erfindung beispielsweise erläutert.

Die in der Figur schematisch dargestellte Anlage besteht aus einer Absorptionszone 1 und einer Regenerationszone 2. Ferner sind die verfahrensmäßig wesentlichen Kühler 8 und 10, ein Erhitzer 15 und ein Abscheidebehälter 12 dargestellt, während wärmewirtschaftlich, fördertechnisch und regeltechnisch bedingte Einzelheiten zwecks besserer Übersicht fortgelassen wurden. Das zu behandelnde Gas tritt durch die Leitung 3 in die Absorptionszone 1 ein. Diese kann üblicherweise aus einer Boden- oder Füllkörperkolonne bestehend und wird vom Gas von unten nach oben durchströmt. Das behandelte Gas verläßt die Anlage durch die Leitung 4.

Am oberen Ende der Absorptionszone 1 wird durch die Leitung 5 die erfindungsgemäße Absorptionslösung aufgegeben und durchläuft die Absorptionszone von oben nach unten im Gegenstrom zum Gas. Die Lösung tritt durch die Leitung 6 aus und enthält die aus dem Gas aufgenommenen Gasbestandteile in gelöster Form. Sie gelangt zur Regenerationszone 2, welche üblicherweise eine Kolonne mit Böden oder Füllkörpern ist und von der Lösung von oben nach unten durchströmt wird. Im unteren Teil wird sie durch den Erhitzer 15 indirekt beheizt und verdampft dabei teilweise. Die aufsteigenden Dämpfe strömen im Gegenstrom zur Absorptionslösung aufwärts, erwärmen die Lösung und treiben die in der Absorptionszone 1 aufgenommenen Gasbestandteile aus. Dabei kondensiert ein Teil der Dämpfe wieder. Die restlichen Dämpfe und die ausgetriebenen Gasbestandteile treten durch die Leitung 9 aus. Im beispielsweise mit Wasser beaufschlagten indirekten Kühler 10 werden sie gekühlt, wobei die kondensierbaren Bestandteile verflüssigt werden. Diese ebenso wie die verbleibenden Gasbestandteile gelangen durch die Leitung 11 in den Abscheidebehälter 12. Von dort wird das Kondensat als Rückfluß durch die Leitung 14 auf den oberen Teil der Regenerierzone 2 aufgegeben, während die Gase durch die Leitung 13 abgeführt werden.

Die von den aufgenommenen Gasbestandteilen befreite regenerierte Absorptionslösung verläßt die Regenerierzone durch die Leitung 7, wird im indirekten Kühler 8 beispielsweise durch Kühlwasser gekühlt und tritt durch die Leitung 5 wieder in die Absorptionszone 1 ein.

In den folgenden Ausführungsbeispielen wird die Erfindung verdeutlicht.

## Beispiel 1

In einer Anlage, die mindestens die Merkmale der vorstehend erläuterten Figur aufweist, werden 10 000 m³/Stunde eines Gases mit 5,0 Vol.-% $CO_2$, 0,8 Vol.-% $H_2S$, 0,05 Vol.-% COS, Rest CO und $H_2$ (hier wie auch im folgenden werden m³ eines Gases auf den Meßzustand bei 0 °C und 1,013 bar bezogen) bei einem Druck von 50 bar und mit einer Temperatur von 25 °C durch die Leitung 3 der Absorptionszone 1 zugeführt. In diese Absorptionszone treten am oberen Ende durch die Leitung 5 17 m³ pro Stunde einer Absorptionslösung mit 25 °C ein, welche pro Liter 1,5 Mol Diisopropylamin in Methanol gelöst enthält. Durch diese erfindungsgemäß zusammengesetzte Absorptionslösung wird das Gas im Gegenstrom gewaschen. Das durch die Leitung 4 mit 35 °C austretende gereinigte Gas (9 400 m³/Stunde) enthält nur noch weniger als 0,1 mg Schwefel pro m³ in Form von $H_2S$ und COS sowie 0,000 5 Vol.-% $CO_2$, Rest CO und $H_2$. Aus der Absorptionslösung aufgenommene geringe Anteile von Methanol und Amin können in bekannter Weise leicht entfernt werden, so daß das Gas anschließend einer Syntheseanlage für Alkohole zugeführt werden kann.

In der Absorptionszone 1 werden 600 m³ Gas, bestehend aus $CO_2$, $H_2S$, COS und etwas CO und $H_2$ von der Lösung absorbiert. Insgesamt werden 1,03 Mole $CO_2$ pro Mol Amin aufgenommen. Dabei

4

erwärmt sich die Absorptionslösung auf 54 °C und läuft mit dieser Temperatur durch die Leitung 6 zur Regenerationszone 2. Diese besteht aus einer üblichen Regenerierkolonne und wird mit einem Druck von 1,5 bar (absolut) am oberen Ende betrieben.

Beim Eintritt in diese Regenerierkolonne entspannt die Absorptionslösung und wird beim Durchlaufen nach unten von den aus dem unteren Teil aufsteigenden Dämpfen erwärmt und gestrippt, wobei die in der Absorptionszone 1 aufgenommenen Gasbestandteile in die Gasphase übergehen. Durch die indirekte Heizvorrichtung 15 im unteren Teil der Regenerierkolonne wird die Absorptionslösung auf die Siedetemperatur von 80 °C bei dem herrschenden Druck erhitzt und die aufsteigenden Dämpfe erzeugt. Die regenerierte Absorptionslösung verläßt die Regenerierzone durch die Leitung 7, wird im indirekten Kühler 8 gekühlt und durch die Leitung 5 wieder auf die Absorptionszone 1 aufgegeben.

Die entspannten und ausgestrippten Gase und Dämpfe treten aus der Regenerierzone durch die Leitung 9 aus. Im indirekten Kühler 10 werden sie auf 22 °C gekühlt, wobei enthaltenes Methanol und Amin kondensieren und auch einen Teil des $CO_2$ und $H_2S$ binden. Das verbleibende Gas und das gebildete Kondensat gelangen durch die Leitung 11 in den Abscheidebehälter 12. Von hier wird das abgetrennte Kondensat durch die Leitung 14 auf den Kopf der Regenerierkolonne als Rückfluß aufgegeben. 600 m³ Gase, bestehend aus 83,3 Vol.-% $CO_2$, 13,3 Vol.-% $H_2S$, 0,8 Vol.-% COS, 2,5 Vol.-% $CO + H_2$, sowie etwas Dämpfe von Methanol und Amin treten durch die Leitung 13 aus. Methanol und Amin können daraus in bekannter Weise leicht zurückgewonnen werden, während das verbleibende Gaz zu Schwefelsäure verarbeitet werden kann.

Bei dieser Arbeitsweise können wegen der geringen Differenz zwischen den Temperaturen in der Absorptionszone und in der Regenerierzone kostspielige Wärmetauscher für die Absorptions lösung entbehrt werden. Nur die regenerierte Absorptionslösung muß vor der Verwendung in der Absorptionszone gekühlt werden. Da die Absorptionslösung und ihre Bestandteile nicht korrosiv sind und die Temperaturen niedrig sind, kann die dargestellte Anlage aus Stahl, ohne Verwendung teurer korrosionsfester Werkstoffe, gebaut werden. Der Wärmebedarf der Regenerierzone ist gering, weil die umlaufende Absorptionslösung nur 1,7 m³ pro 1 000 m³ zu behandelndes Gas beträgt und die Regenerier-temperatur niedrig und der Bedarf an aufsteigenden Strippdämpfen in der Regenerierzone gering ist.

Wegen des niedrigen Temperaturniveaus kann Dampf von geringem Druck oder heißes Wasser (z. B.) Dampfkondensat) für die indirekte Heizvorrichtung 15 verwendet werden. Eine Vorrichtung für die Aufarbeitung der Absorptionslösung zwecks Abtrennung thermisch nicht regenerierbarer hochsiedender Nebenprodukte aus Bestandteilen der Absorptionslösung ist nicht erforderlich.

## Vergleichsversuch

Die gleiche Gasmenge wird unter gleichen Ausgangsbedingungen mit einer Absorptionslösung gemäß dem Stande der Technik nach DE-C-18 15 137 behandelt. Diese Absorptionslösung besteht aus einem Gemisch aus einem primären aliphatischen Alkohol, Äthanolaminen und Wasser, nämlich aus 3,0 Mol Diäthanolamin pro Liter eines Gemisches von Methanol mit 10 Gewichtsprozent Wasser. Hiervon werden 22 m³ pro Stunde benötigt, um 10.000 m³ des Gases auf die gleichen niedrigen Restgehalte an $H_2S$ und COS zu reinigen, wobei auch das gesamte $CO_2$ ausgewaschen wird. Der Absorptionslösungsumlauf ist also um 29 % größer, obwohl die Lösung doppelt so viel Amin enthält, und die Beladung an $CO_2 + H_2S + COS$ beträgt nur 0,40 Mol/Mol Amin. Der Wärmebedarf in der Regenerierzone ist im Vergleich zum Beispiel 1 um 50 % größer, und man benötigt eine Vorrichtung zum Abtrennen nicht regenerierbarer Nebenprodukte mit zusätzlichem Energiebedarf.

## Beispiel 2

50 000 m³ pro Stunde eines Gases mit 5,2 Vol.-% $CO_2$, 1,2 Vol.-% $H_2S$, Rest CO und $H_2$ werden in einer Anlage, die mindestens die Merkmale der Figur aufweist, bei einem Druck von 51 bar und mit einer Temperatur von 27 °C durch die Leitung 3 der Absorptionszone 1 zugeführt. Am oberen Ende treten durch die Leitung 5 50 m³ einer Absorptionslösung, bestehend aus 1,5 Mol Diisopropylamin pro Liter und Methanol mit einer Temperatur von 26 °C, ein. Aus dem Gas wird das $H_2S$ vollständig und das $CO_2$ zu 47 % in die Absorptionslösung aufgenommen. Das austretende gewaschene Gas enthält weniger als 1 mg $H_2S$/m³ und noch 2,9 Vol.-% $CO_2$. Dieses Gas findet für eine Methanolsynthese Verwendung.

Wenn es für andere Verwendungszwecke erforderlich ist, kann aus dem gewaschenen Gas in einer zweiten, ebenfalls mit einer erfindungsgemäßen Absorptionslösung betriebenen Absorptionszone auch das restliche $CO_2$ vollständig ausgewaschen werden. Dann fällt aus der zugehörigen Regenerationszone ein $CO_2$-Gas an, das völlig frei ist von Schwefelverbindungen und z. B. für Synthesezwecke verwendet werden kann.

Die beladene Absorptionslösung, welche 1 220 m³ $CO_2$, 600 m³ $H_2S$ und etwas CO und $H_2$ gelöst enthält, wird auf die Regenerationszone 2 aufgegeben. Durch die Leitung 13 werden die dort ausgetriebenen Gase abgeführt, die noch in bekannter Weise zur Rückwashung von Aminspuren behandelt werden können. Danach enthalten die Gase hauptsächlich 31,2 Vol.-% $H_2S$ und 63,5 Vol.-% $CO_2$ und können in üblicher Weise in einer Claus-Anlage zu Schwefel verarbeitet werden. In diesem Beispiel werden also 100 % des $H_2S$ und 47 % des $CO_2$ aus dem Gas ausgewaschen.

5

Dieses Beispiel 2 zeigt die Verwendung einer erfindungsgemäßen Absorptionslösung zur selektiven Entfernung von Schwefelwasserstoff aus $CO_2$-haltigen Gasen unter Erzeugung eines Regenerationsabgases, in welchem das Volumenverhältnis von Schwefelwasserstoff zu $CO_2$ größer ist als in dem zu waschenden Gas.

**Ansprüche**

1. Verfahren zum Entfernen von $H_2S$, $CO_2$, COS und Merkaptanen aus Gasen durch Absorption mittels einer im Kreislauf zwischen einer Absorptionszone und einer Regenerationszone geführten Absorptionslösung, die mindestens eine organische Base in einem organischen Lösungsmittel, das die zu entfernenden Gasbestandteile physikalisch löst, enthält, wobei die Absorption bei einem Druck von 1 bis 180 bar und bei Temperaturen von 5 bis 80 °C erfolgt, dadurch gekennzeichnet, daß die Absorptionslösung pro Liter insgesamt 0,5 bis 5,0 Mol eines oder mehrerer sekundärer oder tertiärer Amine der allgemeinen Formel $R_1$—NH—$R_2$ oder $(R_1)_2$—N—$CH_2$—N—$(R_2)_2$ enthält, wobei $R_1$ und $R_2$ $CH_3$ oder $CH_2$—$CH_3$ oder $CH_3$—CH—$CH_3$ bedeutet und der Siedepunkt des oder der Amine bei 1 bar zwischen 40 und 110 °C liegt, einschließlich Methylethylamin.

2. Verfahren nach Anspruch 1, dadurch gekennzeichnet, daß $R_2$ gleich $R_1$ ist.

3. Verfahren nach Anspruch 1 und 2, dadurch gekennzeichnet, daß man als Amin Diisopropylamin verwendet.

4. Verfahren nach einem oder mehreren der vorhergehenden Ansprüche 1 bis 3, dadurch gekennzeichnet, daß man als Amin Bis-dimethylaminomethan verwendet.

5. Verfahren nach einem oder mehreren der vorhergehenden Ansprüche 1 bis 4, dadurch gekennzeichnet, daß man als organisches Lösungsmittel Methanol verwendet.

6. Verfahren nach Anspruch 5, dadurch gekennzeichnet, daß man aus den gewaschenen Gasen und/oder den Regenerierabgasen Methanol und Amin gemeinsam mittels Wasser zurückwäscht und aus dem Methanol-Amin-Wasser-Gemisch Methanol und Amin abdestilliert und dem Absorptionslösungskreislauf wieder zusetzt.

7. Verfahren nach Anspruch 1 doer einem der folgenden, dadurch gekennzeichnet, daß man aus dem Gas mit der Absorptionslösung das $H_2S$ vollständig und gleichzeitig nur einen Teil des $CO_2$ entfernt.

8. Verfahren nach Anspruch 7, dadurch gekennzeichnet, daß man dem Gas in einer ersten Absorptionszone das gesamte $H_2S$ und gleichzeitig höchstens 60 % des $CO_2$-Gehalts entzieht und in einer zweiten Absorptionszone das restliche $CO_2$ aus dem Gas entfernt.

**Claims**

1. A process of removing $H_2S$, $CO_2$, COS and mercaptans from gases by adsorption in an absorbent solution which is circulated between an absorbing zone and a regenerating zone and contains at least one organic base in an organic solvent in which the gaseous constituents to be removed are physically soluble, wherein the absorption is effected under a pressure of 1 to 180 bars and at temperatures of 5 to 80 °C, characterized in that the absorbent solution contains one ore more secondary or tertiary amines of the general formula $R_1$—NH—$R_2$ or $(R_1)_2$—N—$CH_2$—N—$(R_2)_2$, wherein $R_1$ and $R_2$ mean $CH_3$ or $CH_2$—$CH_3$ or $CH_3$—CH—$CH_3$, in a total amount of 0.5 to 5.0 moles per liter, and the amine has or the amines have a boiling point between 40 and 110 °C at 1 bar, including methylethylamine.

2. A process according to claim 1, characterized in that $R_2$ equals $R_1$.

3. A process according to claim 1 and 2, characterized in that diisopropylamine is used as an amine.

4. A process according to one or more of the preceding claims 1 to 3, characterized in that bis-dimethylaminomethane is used as an amine.

5. A process according to any of the preceding claims 1 to 4, characterized in that methanol is used as an organic solvent.

6. A process according to claim 5, characterized in that methanol and amine are jointly backwashed with water from the scrubbed gases and/or the exhaust gases from the regeneration, and methanol and amine are distilled from the methanol-amine-water mixture and are recycled to the circulating absorbent solution.

7. A process according to claim 1 or any of the preceding claims, characterized in that $H_2S$ is completely removed from the gas by the absorbent solution and simultaneously $CO_2$ is only partly removed.

8. A process according to claim 7, characterized in that all of the $H_2S$ content and at most 60 % of the $CO_2$ content are simultaneously removed from the gas in a first absorbing zone and the remaining $CO_2$ is removed from the gas in a second absorbing zone.

**Revendications**

1. Procédé d'élimination de $H_2S$, $CO_2$, COS et de mercaptans de gaz par absorption, au moyen d'une solution d'absorption envoyée en circuit fermé entre une zone d'absorption et une zone de régénération et contenant au moins une base organique dans un solvant organique qui dissout physiquement les constituants gazeux à éliminer, l'absorption s'effectuant sous une pression de 1 à 180 bar et à des températures de 5 à 80 °C, caractérisé en ce que la solution d'absorption contient par litre au total de 0,5 à 5,0 moles d'une ou de plusieurs amines secondaires ou tertiaires de formule développée $R_1$—NH—$R_2$ ou $(R_1)_2$—N—$CH_2$—N—$(R_2)_2$, $R_1$ et $R_2$ étant $CH_3$ ou $CH_2$—$CH_3$ ou $CH_3$—CH—$CH_3$ et le point d'ébullition de l'amine ou des amines sous 1 bar est compris entre 40 et 110 °C, la méthyléthylamine étant incluse.

2. Procédé suivant la revendication 1, caractérisé en ce que $R_2$ est identique à $R_1$.

3. Procédé suivant la revendication 1 ou 2, caractérisé en ce qu'il consiste à utiliser comme amine la diisopropylamine.

4. Procédé suivant l'une ou plusieurs des revendications précédentes 1 à 3, caractérisé en ce qu'il consiste à utiliser comme amine le bis-diméthyl-aminométhane.

5. Procédé suivant l'une ou plusieurs des revendications 1 à 4 précédentes, caractérisé en ce qu'il consiste à utiliser comme solvant organique du méthanol.

6. Procédé suivant la revendication 5, caractérisé en ce qu'il consiste à récupérer en commun par lavage au moyen d'eau, du méthanol et une amine à partir des gaz lavés et/ou des gaz résiduaires de régénération, et à séparer par distillation le méthanol et l'amine du mélange de méthanol, d'amine et d'eau, et à les remettre dans le circuit de la solution d'absorption.

7. Procédé suivant la revendication 1 ou l'une des revendications suivantes, caracterisé en ce qu'il consiste à éliminer entièrement le $H_2S$ et en même temps seulement une partie du $CO_2$ du gaz par la solution d'absorption.

8. Procédé suivant la revendication 7, caractérisé en ce qu'il consiste à enlever du gaz, dans une première zone d'absorption, tout le $H_2S$ et en même temps au plus 60 % de la teneur en $CO_2$, et, dans une seconde zone d'absorption, à éliminer du gaz le $CO_2$ restant.